# EUROPEAN PATENT SPECIFICATION

(11) **EP 3 268 326 B1**
(45) Date of publication and mention of the grant of the patent: **05.01.2022**
(21) Application number: 16708176.9
(22) Date of filing: 07.03.2016
(51) Int. Cl.: C04B 26/04, C04B 28/06, C04B 28/14

(54) **SEALING SLURRY AND FLEXIBLE CEMENTITIOUS WATERPROOFING MEMBRANE PRODUCED THEREOF**
DICHTUNGSAUFSCHLÄMMUNG UND DARAUS HERGESTELLTE FLEXIBLE ZEMENTARTIGE WASSERDICHTE MEMBRANE
BOUE DE SCELLEMENT ET MEMBRANE D'IMPERMÉABILISATION CIMENTAIRE FLEXIBLE PRODUITE À PARTIR DE CETTE BOUE

(30) Priority: 09.03.2015 EP 15158208
(43) Date of publication of application: 17.01.2018
(73) Proprietor: BASF SE, 67056 Ludwigshafen (DE)
(72) Inventor: HESSE, Christoph, 85560 Ebersberg (DE); SEIP, Klaus, 67112 Mutterstadt (DE)
(74) Representative: BASF IP Association
(86) International application number: PCT/EP2016/054792
(87) International publication number: WO 2016/142339

(56) References cited:
- EP-A1- 2 762 545
- WO-A1-2006/094528
- WO-A1-2013/086722
- US-A1- 2011 257 303
- DATABASE WPI Week 200935 Thomson Scientific, London, GB; AN 2009-F07483 XP002744251, & KR 2008 0105845 A (HANIB CONSTR CO LTD) 4 December 2008 (2008-12-04)

## Description

### Abstract

The present invention relates to novel cementitious slurries that remain flexible after hardening.

### Field of the Invention

Cementitious waterproofing slurries or slurry-type seal coatings are widely used in the construction industry. Generally they are used for waterproofing and protecting surfaces such as masonry or concrete and screed or tile covered bodies from penetrating water and other environmental influences.

### Background of the Invention

The inventive coatings may be used as a coating agent for producing water-resistant coatings characterized in that the coating slurry contains one or more mineral binders, one or more polymers based on rubber or synthetic rubber, one or more filler agents and optionally one or more additives that may be required to fine-tune specific characteristics of the final product.

The term "cementitious" refers to hydraulic mineral binder containing components .The term "mineral binder" as used herein is intended to mean calcium silicate cements, ordinary Portland cements, puzzolanic cements, aluminate cements, calcium sulfoaluminate cements, slag cement, white Portland cement, masonry cement, waterproof cement, mixtures of the different cement types and similar hydraulic binder materials. Puzzolanic cements contain siliceous or siliceous and aluminous material from, e.g., volcanic origin, such as volcanic ash or pumice, or are obtained from clays, calcined oil shale or sedimentary rock, but also from industrial sources such as fly ash just to name a few of the materials that are used as additive in construction mixtures with hydraulic binder properties.

In the case where the mineral binder comprises a mixture of several hydraulic binder types, the mixtures are preferably of calcium aluminate and/or sulfoaluminate cement with blast furnace cement, filler cements or even mixtures with lime hydrate or gypsum or ordinary Portland cement. The term "calcium aluminate cement" (CAC) as used herein is intended to include those cementitious materials normally understood in the art to contain as main constituent mono calcium aluminate (CaO xAl2O3). This would include high alumina cement (HAC), calcium aluminate cement and many other commercially available aluminous types of cement. HAC is normally understood in the art to contain more than 15% of mono calcium aluminate. The term "calcium sulfoaluminate cement" (CSA) as used herein is intended to include those cementitious materials normally understood in the art to present special cements used for rapid set, high early strength development and shrinkage compensation. In particular calcium sulfoaluminate cements contain more than 15 % of tetracalcium aluminate sulphate. This gives calcium sulfoaluminate cement the ability to achieve high early strength and continuous progressive strength development up to very high values (i.e. 60 MPa at 28 days). Its kiln production temperature generally is about 200 °C lower than for ordinary Portland cement, making it a socalled "low energy" cement.

Typically natural or synthetic latex or rubber may be used as the polymer dispersion in the inventive composition. Latex generally is an aqueous dispersion of polymer, wherein the polymer may be selected from natural or synthetic rubbers. Synthetic rubbers comprise polymers based on e.g. styrene acrylates or styrene and 1,3-butadiene (styrene-butadiene rubber; SBR). Further synthetic rubbers are butadiene rubber, neoprene, polysulfide rubbers (such as thiokols), butyl rubber and silicones. Other polymers such as poly vinyl acetate ((C4H6O2)n) which is prepared by polymerization of vinyl acetate monomer (VAC; free radical vinyl polymerization of the monomer vinyl acetate) and ethylene vinyl acetate (also known as EVA) is the copolymer of ethylene and vinyl acetate. The weight percent vinyl acetate usually varies from 10 to 40 %, with the remainder being ethylene, carboxylated styrol butadienes (XSB) and other terpolymers or polymers composed of three different monomer units. Synthetic rubber based on styrene acrylate chemistry or any other type of artificial elastomer is mainly synthesized from petroleum byproducts. Different monomers are used for the manufacture of synthetic rubbers. SBR, VAC, EVA, styrene acrylate (SA), polyurethane (PU) and combinations thereof are commonly used in the waterproofing segment. Also styrene acrylates using styrene and specific types of acrylates like (n-butyl acrylate (nBA), ethyl hexyl acrylate (EHA) and methyl meth acrylate (MMA) are not uncommon. An elastomer is a material with the property that it can be stretched to great lengths and yet recover its original shape after the strain is released. Elastic materials will therefore return to their previous size and shape without permanent deformation.

Fillers typically utilized in the inventive composition are fine quartz sands of a grain size between 0.09 and 1 mm, lime stone powder of a grain size between 2 and 130 µm, calcium silica hydrate between 0. 1 and 1 mm, sintered glass spheres between 0.05 and 0.6 mm or any other comparable filler a person skilled in the art would choose.

The composition may further contain additives. Additives may be selected from a wide variety of substances and compounds used to modify physical and chemical properties of the waterproofing slurries. Mineral thickeners like bentonite, acrylic thickeners, PU-thickener, hydrophobically modified alkali-swellable emulsion (HASE) thickener, cellulosic ether, starch ether, defoamers, hydrophobizing additives, retarders such as fruit acids or sodium gluconate and/or accelerators like calcium formate, cross linking agents like butanedioldiacrylat, allylmethacrylat, diacetoneacrylamid, 2-acetoacetoxyethylmethacrylat, glycidylmethacrylat, methallyl methacrylat or silane and activators to name a few. As activators alkaline activators are preferred, such as calcium hydroxide, sodium hydroxide, ordinary Portland cement or water soluble silicate compounds selected from sodium silicate, potassium silicate, waterglass, aluminium silicate, calcium silicate, silicic acid, sodium metasilicate, potassium metasilicate and mixtures of two or more of these constituents. Generally the water soluble silicate compounds are selected from alkali metasilicates of the formula m SiO2 • n M2O, wherein M is Li, Na, K and NH4, preferably Na or K, or a mixture thereof, m and n refer to moles and the ratio of m:n is in the range of about 0.9 to about 4, preferably about 0.9 to about 3.8 and more preferred about 0.9 to about 3.6. The selection of additives may further be supplemented by any other additive known to the person skilled in the art.

Typically cementitious slurry-type waterproofing coatings are used in the construction or building industry for sealing and protection of the surfaces of any kind of artificial or construction structures by coating such structures with slurry-type waterproofing compositions that after hydration and hardening form membranes. The resulting membranes protect the underlying structures and prevent the penetration of water and other aqueous solutions, other non-aqueous liquids and/or gases such as carbon dioxide or sulfur dioxide. Furthermore cementitious slurry-type waterproofing membranes are also used beneath tiles and slabs of stone or other materials for example on balconies or terraces. In such cases the cementitious slurry-type waterproofing membranes functions not only as a waterproofing membrane , but also as a crack bridging layer and is applied directly to the concrete, masonry or other substrate surface. Further coverings of tiles and slabs are then laid thereon.

Basically cementitious slurry-type waterproofing membranes are products based on fine cement mortars with specific proportions of elastifying components. The products are applied in one or more layers. In many cases two layers, between 0.5 and 10 mm are applied. State of the art cementitious slurries complying with the industry standards [EN 14891 (12/2006), ETAG 022 (6/2005) or EN 1504-2 (7/2004)] comprise systems containing more than 10 weight % cement. The final waterproofing membranes have a thickness of more than 1 mm, particularly more than 2mm.

In the construction business the use of slurry-type sealing coatings based on mineral binders, polymers and fillers for the coating of substrates is widespread and common and utilized as waterproofing membranes. In most cases the waterproofing formulations are compositions containing a bituminous component, a polymer - bitumen emulsion, a pure polymer emulsion or polymer powder as flexibilizing constituent. The mineral binder is generally used as a hydration agent and is contained in the formulations in the range of about 20 - 50 weight %.

Coating composition and formulations are described in US 4746365. The disclosed formulations are gypsum containing compositions of aluminous cement as mineral binder system in addition with added latex emulsions to produce coating materials. These binder compositions are optimized such as to present reduced wet expansion and drying shrinkage of the final product. Not disclosed are binder compositions based on calcium aluminate and/or calcium sulfoaluminate cements with overall reduced cement content and respective utilization as flexible sealing slurries.

Waterproofing membranes are provided as either one-component (1K), polymer containing powders or as two-component (2K) formulations consisting of (i) a dry-component comprising the powdery or pulverulent constituents such as cement, sand, limestone powder etc. and (ii) a wet-component further containing polymer and potentially additional additives.

Typically the dry-component (i) of 2K sealing slurry systems contain:
0-50 weight % lime stone powder;
10 - 50 weight % silica sand,
30 - 50 weight % calcium silicate cement such as ordinary Portland cement,
0 - 20 weight % calcium aluminate cement and
0 - 10 weight % additives selected from one or more of anti-foaming agents, thickeners, activators, cross-linking agents, pigment, fiber etc.

The wet-component (ii) typically contains
30 - 70 weight % polymer,
0 - 10 weight % additives selected from one or more of anti-foaming agents, thickeners, activators, cross-linking agents, pigments etc.

Typical 1K sealing slurry formulations contain:
0 - 40 weight % lime stone powder;
20 - 75 weight % silica sand,
15 - 40 weight % calcium silicate cement such as Portland cement,
0 - 20 weight % calcium aluminate cement,
0 - 6 weight % calcium sulphate, alpha or beta semihydrate
0 - 40 weight % calcium hydroxide
10 - 40 weight % polymer,
0 - 7 weight % additives selected from one or more of anti-foaming agents, thickeners, activators, cross-linking agents, pigments, retardants, accelerants etc.

WO 2012/038302 provides formulation for coatings useful as durable and robust coatings of water-carrying infrastructures. The formulations are made-up of mineral binders, whereas the examples only provide formulations based on Portland cement. Preferably the polymer composition is a vinyl acetate-ethylene copolymer stabilized with polyvinyl alcohol. Not disclosed are binder compositions based on calcium aluminate and/or calcium sulfoaluminate cements in combination with styrene acrylates with overall reduced cement content and respective utilization as flexible sealing slurries.

WO 2013/050388 discloses dry building material formulations containing hydraulic binders, fillers and polymers that may be utilized for use as self levelling masses, tile adhesive and building masses in general. The formulations are further characterized by their content of silica sols, i.e. colloidal silica dioxide particles. Not disclosed are binder compositions based on calcium aluminate and/or calcium sulfoaluminate cements with overall reduced cement content and utilization as flexible sealing slurries.

US 6,166,113 discloses flexible building compositions based on mineral binders and vinyl ester-ethylene mixed polymers that are stabilized by protective colloids. To flexibilize the building compositions the colloid stabilized vinyl ester ethylene copolymers are used. Not disclosed are binder compositions with reduced binder content based on calcium aluminate and/or calcium sulfoaluminate cements with overall reduced cement content and utilization as flexible sealing slurries.

EP 1,306,357 describes a water proof sealing mortar with improved durability. This is achieved by reducing the ordinary Portland cement content such that no continuous hydration matrix can be formed. In combination with polymers with high swelling capability a coating material is obtained that provides water-proofing and durability features.

US 2011/257303 discloses a hydraulically setting sealing composition comprising: (i) hydraulic binder 7 wt%, (ii) silica sand 30 wt %, (iii) vinyl acetate-ethylene-versatic acid ester copolymer 30 wt %, (iv) calcium carbonate 13 wt% and (v) additives 6 wt %.

WO 2006/094528 discloses a composition comprising 12 wt% calcium aluminate cement, 30 wt % silica sand, 30 wt% vinyl acetate-ethylene-versatic acid vinyl ester copolymer, 34 wt % calcium carbonate and various additives.

WO2013/086722 discloses a flexible water proofing membrane. The cement based compositions comprise in general 25-45 wt% cement, 40- 70 wt % sand, and 1-6% redispersible polymer powder Water proofing membranes comprise 30-50 wt% Portland Cement, 30-70 wt % sand, 30-50 wt% calcium sulfoaluminate cement, 0.1-10 wt% redispersible polymer powder.

Nevertheless the disclosed formulation fail to provide waterproofing slurries that after hydration remain flexible, present low shrinkage and provide durable crack-bridging properties.

### Summary of Invention

The binder system consists of cement and a polymer powder in the case of one component systems. The polymer constituent is responsible for the flexibility of the final product wherein the crack-bridging property of the product is achieved or based on this feature. This is one of the major advantages of flexible slurry-type waterproofing membranes over conventional rigid mineral-based waterproofing slurry coatings. The improved water-impermeability is another advantage of the inventive flexible waterproofing membranes.

These fast hardening binder systems are configured such that a minimum of one but at least two or more layers of membranes may be applied per day prior to the application of final surface coverings such as tiles for example. It may also be possible to utilize fast drying tile adhesives and even apply the final grouting, all in one day.

The polymer content necessary for final flexibility and crack-bridging property of the hardened membrane according to above mentioned industry standards will be over 20 weight %. Generally polymer contents are in the range of 25 - 30 weight%, or up to 70 weight %.

Cementitious waterproofing slurries are usually applied in two layers or coats either with brushes, swabs, trowels or sprayed resulting in dry thickness of approximately 1 mm per layer. The cementitious waterproofing membranes of the invention are provided as one-component (1K), polymer containing powder formulations.

The composition for sealing slurries according to claim 1 comprises (i) 2 - 15 weight % hydraulic binder(ii) 40 - 77 weight % silica sand(iii) 15 - 20 weight % polymer(iv) 5-20 weight % limestone powder(v) 0 - 7 weight % one or more additives characterized in that the hydraulic binder component comprises calcium aluminate cement, calcium sulfoaluminate cement or mixtures thereof and the polymer is selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate, and vinyl versatates, vinyl acetate-acrylic ester copolymer, vinyl acetate-acrylic ester-ethylene copolymer, styrene-butadiene copolymer, styrene-acrylic ester copolymer, and styrene acrylate copolymer, with the acrylic esters in each case being esters with branched or linear alcohols containing from 1 to 10 carbon atoms, preferably the polymer is selected from the group comprising styrene acrylate copolymer, polyvinyl acetate, styrene butadiene copolymer or mixtures thereof in liquid or powder form.

Typically the dry one component (1k) type sealing slurry formulations are further admixed with water resulting in a 15 - 40 weight %, preferably 20 - 30 weight % of 1K sealing slurry compositions.

### Description of the Invention

The invention is set out in the appended set of claims.

The high content of calcium silicate cements in the classical waterproofing slurries as described above contravenes high flexibility of the resulting dried waterproofing membrane. In order to achieve flexibilities as demanded, very high contents of polymer are necessary. It is generally accepted that high calcium silicate cement contents are responsible for fast drying due to binding of the contained water via inherent hydration or curing of the cement constituents of the waterproofing slurries. Also the adhesion of the waterproofing slurry to underlying structures or substrates seems to be positively influenced by high calcium silicate contents.

X-ray diffraction measurements revealed that the cement turnover in cementitious waterproofing slurry compositions containing 50 weight % calcium silicate cement (Portland CEMI) and 28 weight % polymer after 24 hours and 7 days is less than 1 weight %. High cement content and low cement turnover rates in the traditional cementitious waterproofing slurry systems therefore results in a high degree of post hydration brittleness and strong shrinkage of the final hardened membrane.

Standard CSA cements are characterized by the early and fast ettringite formation that is responsible for strength development of such CSA- cements. The utility of the CSA-cements generally is restricted to specialty applications such as for screeds, tile adhesives etc. Uses for constructive applications have been hampered by lack of durability of the resulting building applications and instability under high water pressure or prolonged application submersed under water.

The deficits and disadvantages of the prior art can be overcome by the present invention as described herein.

The inventive binder system consists of cement and and a dry polymer dispersion powder in the case of one-component systems. A polymer/cement ratio of > 0.6 of the resulting slurry is required in order to obtain the flexibility as demanded for sealant purposes in the construction business. The flexibility is a property of the waterproofing membranes that essentially serves for the bridging potential of surface cracks in the support or substrate on to which the membrane was applied according to European Standards EN 14891, EN 1504-2, European Technical Approval Guidelines (ETAG) 022 part 1, German certification of the building control authority (abP, allgemeines bauaufsichtliches Prüfzeugnis) and DIN 18195 (standard according to the German Institute for Standard "Deutsches Institut für Normung e.V.).

The problem to be solved by the present invention was to provide an improved formulation for stable and flexible slurries, preferably water-proofing membranes wherein the final cured coatings have reduced brittleness and shrinking capacity. The inventive waterproofing slurries therefore are ideal for providing waterproofing and coatings with superior crack-bridging property. The choice of the cement type has substantial influence on the properties of the end product, i.e. the cured waterproofing membranes. Substitution and/or replacement of calcium silicate cement amounts with calcium sulfoaluminate or calcium aluminate cement in the sealing slurry formulations had surprising effects with regard to the brittleness of the cured product. In particular the reduction of the cement content below 10 weight % substantially reduces brittleness and shrinkage behavior of the material. Calcium sulfoaluminate and calcium aluminate cements as cementitious component of the inventive waterproofing membrane lead to a product with improved durability, flexibility and water resistance and stability compared to waterproofing slurries based primarily on ordinary Portland cements. The inventive hydraulic binder component may comprise up to 100, 95, 90, 85, 80, 75 or 70 weight % calcium aluminate cement, calcium sulfoaluminate cement or mixtures thereof.

Further, the choice and grain size of the mineral fillers also has substantial influence on the drying, curing and flexibility behavior of the membrane.

Polymer or latex powder is selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate and vinyl versatates, vinyl acetate-acrylic ester copolymer, vinyl acetate-acrylic ester-ethylene copolymer, styrene-butadiene copolymer and styrene-acrylic ester copolymer, with the acrylic esters in each case being esters with branched or linear alcohols containing from 1 to 10 carbon atoms. Preferabyl the latex powder is selected from the group comprising styrene acrylate copolymer, polyvinyl acetate, styrene butadiene copolymer or mixtures thereof.

A further advantage of the inventive formulations is the reduced amount of additives required to obtain optimal functionality. For example the resulting dry formulations based on the inventive recipes may easily be stored for longer time periods without the need of adding additional anti-caking additives as in conventional formulations. This has beneficial effects in reducing the costs of manufacturing.

It was found that good absorption of spray drying additives like polyvinyl alcohol, sulfonates or polycarboxylates and emulsifiers is fundamental for an adequately high wet-strength of the utilized polymer in the formulation. Especially dispersant polymers with a high content of water sensitive spray drying additives of 3 - 15 weight % present high absorption on the surface of the Calcium sulfoaluminate and calcium aluminate cements. The absorptive capacity can be determined by measuring the total organic content of test formulation with or without respective spray drying additives in the cement emulsions. For the analysis of total organic content the test formulation is prepared and after five minutes the liquid is separated from the solid by high pressure through a filter. In the resulting liquid the organic carbon content is determined with a total organic carbon (TOC) analyzer conform to the standard DIN EN 1484 requirements with respective combustion equipment.

The absorptive capacity of calcium aluminate cements lies in the range of 50 - 80 weight % whereas in contrast thereto the absorptive capacity of Portland cement is merely in the range of 10 - 25 weight %.

For the selection of an appropriate cement types useful in reduced cementitious flexible waterproofing membranes the absorptive capacity of the cement is crucial. Cements with high absorptive rates are preferred.

It has been demonstrated that calcium sulfoaluminate cements with low calcium sulfate contents, preferably mixtures that are free of calcium sulfate are superior for use in highly cement reduced sealing slurry formulations and have very good absorptive properties.

The inventive cementitious water-proofing slurries may also be utilized for producing or manufacturing stable and highly flexible water-proofing membranes. Such water-proofing membranes may optionally contain a base fabric or matrix which is coated on one or both sides with the inventive composition as a coating to form a non-permeable barrier. Such water-proofing membranes may be composed of one or more layers of each cementitious water-proofing slurry and /or base fabric or matrix and constitute a single or multiple ply membrane. Alternatively the flexible water-proofing membranes may be prepared by immersing a base fabric or matrix into a bed of cementitious water-proofing slurry, the slurry evenly spread out whereby the slurry and base fabric or matrix combine and form a single foil or wallpaper-like element. These waterproofing membranes can be used in various construction and architectural applications. These types of membranes are generally designed for direct installation, with or without combination with any other layers or materials to provide a waterproof barrier. The base fabric or matrix may be selected from woven, knitted or non-woven natural or polymeric fibers, glass fibers, a polymeric adhesive coating, and optionally a polymeric coating on one or both sides of the base fabric. The resulting flexible water-proofing membranes can be manufactured or prefabricated in the form of a foil or wallpaper of controlled quality and stored for further use. Such a prefabricated foil can be utilized as a wallpaper providing for example an immediate to use underground for further tiling without the need of waiting several hours of drying before tile adhesive can be applied as required for standard water-proofing slurries.

In one aspect the invention relates to

A composition for sealing slurries comprising: (i) 2 - 15 weight % hydraulic binder(ii) 40 - 77 weight % silica sand(iii) 15 - 20 weight % polymer(iv) 5-20 weight % limestone powder(v) 0 - 7 weight % one or more additives characterized in that the hydraulic binder component comprises calcium aluminate cement, calcium sulfoaluminate cement or mixtures thereof and the polymer is selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate, and vinyl versatates, vinyl acetate-acrylic ester copolymer, vinyl acetate-acrylic ester-ethylene copolymer, styrene-butadiene copolymer, styrene-acrylic ester copolymer, and styrene acrylate copolymer, with the acrylic esters in each case being esters with branched or linear alcohols containing from 1 to 10 carbon atoms, preferably the polymer is selected from the group comprising styrene acrylate copolymer, polyvinyl acetate, styrene butadiene copolymer or mixtures thereof in liquid or powder form.

### Examples

Different types of cement were tested in a sand/limestone mixture (Ordinary Portland Cement (OPC), CSA (Belith), HAC (i) (e.g. Ternal^{®} white) HAC (ii) (Ternal^{®} RG-S) and HAC (iii) (Istra 40). The thickener system used was a combination of cellulose and starch ethers. As a retardant system a combination of tartaric and citric acid was used. Open time was adjusted via retardant system to lie between 45 and 60 minutes. Two concentrations of cement were tested (5 weight % and 3 weight % of HAC, CAC, CSA)

The individual formulation of the tested slurry mixtures samples 1-13 was according to the following recipes: (formulations 9,11 and 13 are not according to the invention)

| | **1** | **2** | **3** | **4** | **5** | **6** | **7** | **8** | **9** | **10** | **11** | **12** | **13** |
|---|---|---|---|---|---|---|---|---|---|---|---|---|---|
| OPC | 10 | 10 | 10 | 10 | 10 | 10 | 10 | 10 | 250 | 10 | | | 50 |
| CSA | 50 | | | | 30 | | | | | 40 | | 50 | |
| HAC (i) | | 50 | | | | 30 | | | | | | | |
| HAC (ii) | | | 50 | | | | 30 | | | | | | |
| HAC (iii) | | | | 50 | | | | 30 | 50 | | | | |
| Alpha hemi hydrate | | | | | | | | | | 5 | | | |
| Quarzsand 0,06-0,2mm | 305 | 305 | 305 | 305 | 305 | 305 | 305 | 305 | | 300 | | 305 | 305 |
| Quarzsand 0-0,355mm | 260 | 260 | 260 | 260 | 260 | 260 | 260 | 260 | 376 | 260 | | 260 | 260 |
| Quarzsand 0,2-0,6mm | 125 | 125 | 125 | 125 | 125 | 125 | 125 | 125 | 109 | 125 | | 125 | 125 |
| limestone powder (Omyacarb 15AL) | 52 | 52 | 52 | 52 | 72 | 72 | 72 | 72 | 25 | 52 | 518 | 62 | 62 |
| Microsilika (940U) | 8 | 8 | 8 | 8 | 8 | 8 | 8 | 8 | 8 | 8 | | 8 | 8 |
| styrene acrylate powder ( Acronal^{®} P5033) | 180 | 180 | 180 | 180 | 180 | 180 | 180 | 180 | 180 | 180 | | 180 | 180 |
| Styrene acrylate dispersion (Acronal 5041) (50% solid content) | | | | | | | | | | | 468 | | |
| Powder defoamer (Vinapor DF9010) | 8 | 8 | 8 | 8 | 8 | 8 | 8 | 8 | 8 | 8 | | 8 | 8 |
| Cellulose Ether (Walocel MW 40000) | 1,2 | 1,2 | 1,2 | 1,2 | 1 | 1 | 1 | 1 | 1 | 1,2 | | 1,2 | 1,2 |
| Starch Ether (Starvis SE 35F) | 0,8 | 0,8 | 0,8 | 0,8 | 0,6 | 0,6 | 0,6 | 0,6 | 0,8 | 0,8 | | 0,8 | 0,8 |
| Acrylic thickener (Rheovis AS1130) | | | | | | | | | | | 2,5 | | |
| Pigment disperser (Dispex CX 4320) | | | | | | | | | | | 5 | | |
| Liquid defoamer (Foamstar NO 2306) | | | | | | | | | | | 2 | | |
| Retarder (tartaric acid) | 0,15 | 0,1 | 0,2 | 0,1 | | | 0,28 | | 0,25 | | | 0,1 | |
| Pigment TiO2 (Kronos 2056) | | | | | | | | | | | 5 | | |
| Retarder (citric acid) | 0,15 | 0,1 | 0,2 | 0,1 | 0,25 | 0,2 | 0,2 | 0,2 | 0,25 | 0,15 | | 0,1 | |
| Sum | 1000,3 | 1000,2 | 1000,4 | 1000,2 | 999,85 | 999,8 | 1000,1 | 999,8 | | | 1000 | 1000,2 | 1000 |
| Water | 212 | 204 | 212 | 216 | 180 | 180 | 192 | 180 | 200 | | | 205 | 205 |
| pot life | 60min | 50min | 60min | 60min | 45min | 45min | 45min | 45min | 45min | 45min | ∞ | 45 min | 24 h |
| Film flexibility, cohesion | High, good | High, good | High, good | High, good | High, good | High, good | High, good | High, good | High Good | mid good | Very high, good | Very high, good | High, middle |
| Static Crack bridging [mm] | 0,6 | 0,6 | 0,6 | 0,6 | 0,8 | 0,8 | 0,8 | 0,8 | 0,2 | 0,5 | 1,8 | 0,8 | 0,6 |
| Film after water storage (14d) | No leaching | No leaching | No leaching | No leaching | No leaching | Mid leaching | Mid leaching | Mid leaching | No leaching | Mid leaching | No leaching | Mid leaching | High leaching |

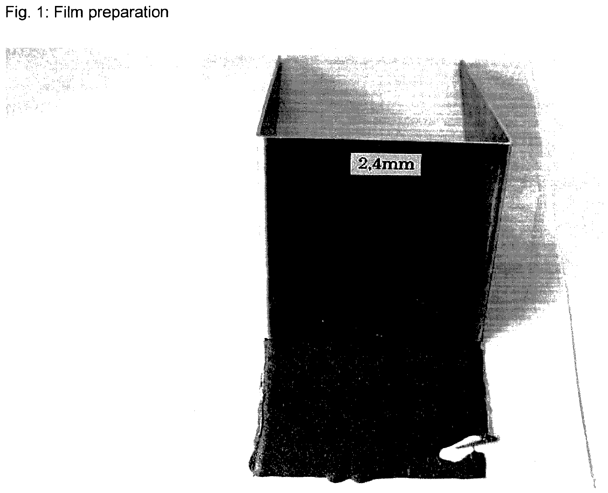

Films of a thickness of 2,4mm were produced by a wiper on a Teflon foil as illustrated in Figure 1. After drying (7 days) the films were stored submersed in water for 14 days. Cohesion and leaching of the films was observed during this time.

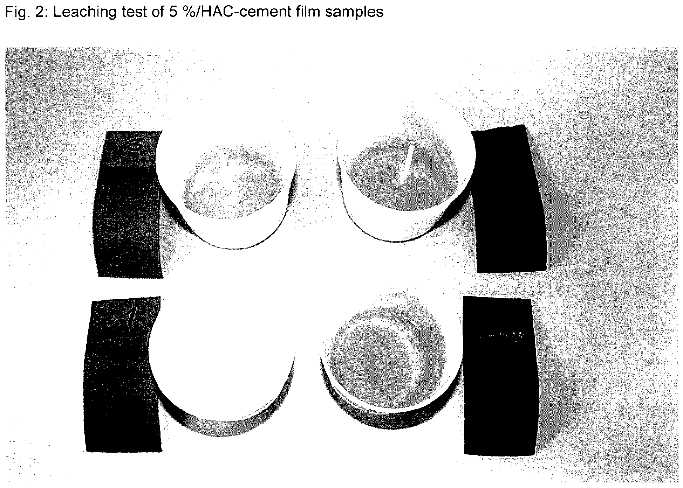

Leaching tests:
Leaching behavior was tested by storage of films submersed in water for up to 14 days.
The different film-types demonstrate different leaching characteristics. The degree of leaching was assessed by the coloring intensity of the residual water.
Sample 1, film made of 5 weight %-CSA/HAC Cement reveals no leaching. Sample 2 and 4 reveal strongest leaching. The leaching behavior of Sample 3 lies between the leaching result of sample 1 and 4 after visual inspection (Fig. 2).

### Manual flexibility and cohesion test

A film was produced as depicted in Fig. 1. After drying under normal conditions (23°C/50% relative humidity for 7 days) the film was rated by hand by manually rolling and stretching the resulting membrane.

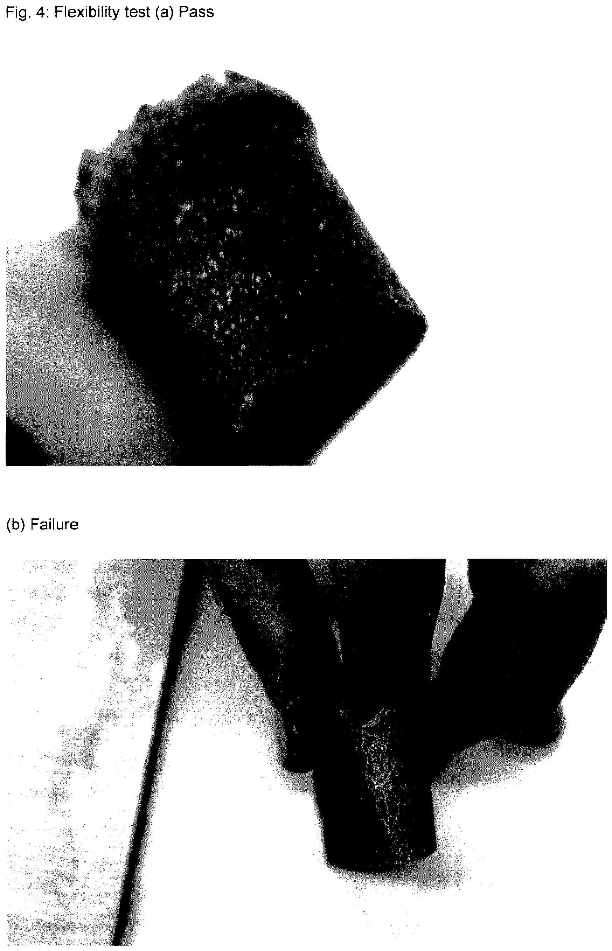

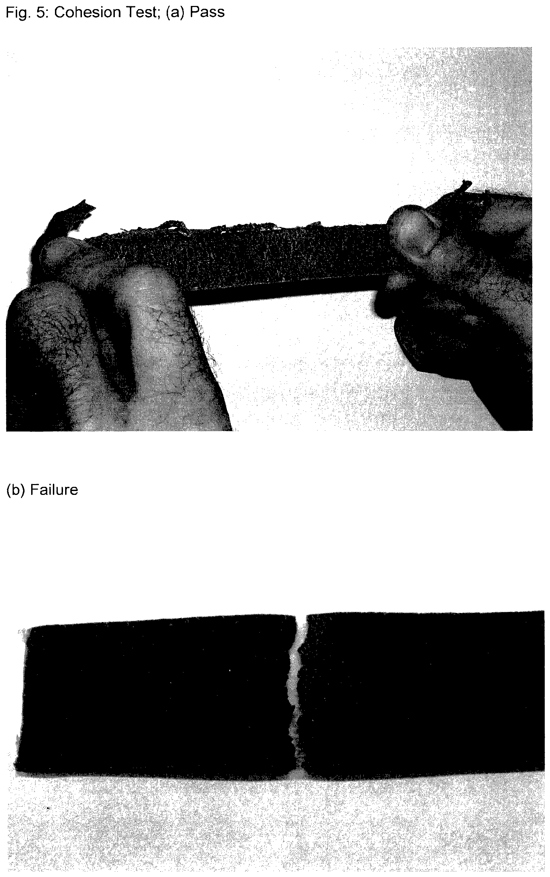

Cohesion tests demonstrated good flexibility properties (Fig. 4) and good cohesion properties (Fig.5) after wet storage as confirmed by manual testing.

Film Samples 5-8 have a cement content of 3 weight% CSA/HAC cement. The observed leaching is stronger as in samples 1-4. Only sample 5 with CSA cement shows no leaching.

Film cohesion of film 6 and 8 is weak while cohesion properties of film 5 and 7 are good.

In conclusion the absorption rate with CSA cement is best in field and allows cement reduced formulations lower than 5 weight % of cement with a sufficient water stability.

### Crack-bridging Test

A mortar prism with an integrated steel wire was produced and dried for 28 days. After drying the water-proofing membrane was applied in two layers of approx. 1.2 mm thickness per layer. After drying of the water-proofing membrane for 28 days under normal conditions (23°C/50% r.H.) the Crack-bridging Test was performed.

In a time period of approximately 15 minutes a crack of 0,4 mm was slowly produced via a screw in a standard crack bridging equipment. Crack dimensions were measured via a loupe or magnifying glass with an integrated scale. The crack was fixed over 24 hours and the behavior of crack-bridging properties of the applied water-proofing membrane was observed. The test was considered a Pass once no crack was visible on the membrane after the observation period. Otherwise if the water-proofing membrane cracked or tore over the mortar-based crack after the evaluation time the test was considered as Failure.

### Prefabricated flexible water-proofing membranes

Formulation for cementitious slurry
OPC 5
CSA 30
HAC (i)
HAC (ii)
HAC (iii)
Alpha hemi hydrate

| | |
|---|---|
| Quarzsand 0,06-0,2mm | 333 |
| Quarzsand 0-0,355mm | 130 |
| Quarzsand 0,2-0,6mm | 152 |
| limestone powder (Omyacarb 15AL) | 103 |
| Powder defoamer (Vinapor DF9010) | 2 |
| Acrylic thickener (Rheovis HS 1980) | 0,4 |
| (mesh mesh Styrene acrylate dispersion (Acronal 5442)(50% solid content) | 460 |
| Liquid defoamer (Foamaster SI2213) | 4 |

| | |
|---|---|
| pot life | 15 min |
| Film flexibility, cohesion | Very high, very good |
| Static Crack bridging [mm] | 3mm |
| Film after water storage (14d) | No leaching |

Prefabricated flexible water-proofing membranes or waterproofing wallpaper foil of a thickness of up to 1 mm was produced by immersing a mesh into a bed of cementitious slurry of the formulation as described above, followed by spreading the slurry into a thin and even membrane as illustrated in Figure 7. After drying (7 days) the single membrane or film (Fig. 8) was applied onto a surface using an adhesive as Illustrated in Figure 9. The membrane provides excellent crack-bridging properties as illustrated in Figure 10.

### Brief Description of the Drawings

Fig.1 Film preparation utilizing wiper with 2.4 mm notch
Fig. 2 Leaching test results of 5 weight % CSA-films stored in water

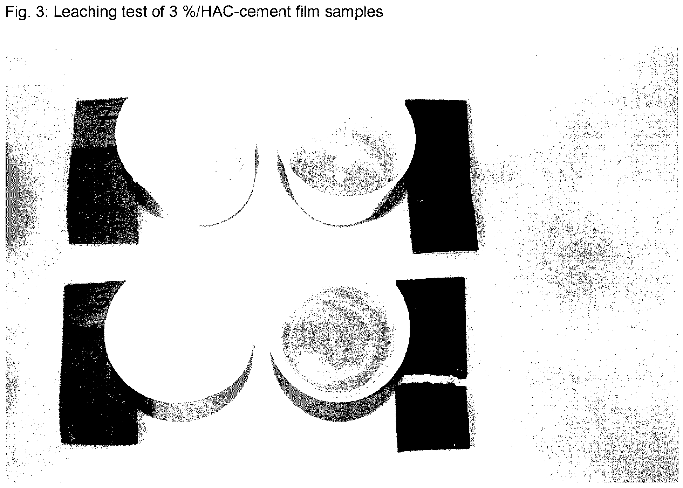

Fig. 3 Leaching test results of 3 weight % CSA-films stored in water
Fig. 4 Flexibility Test; (a) Pass, (b) Failure
Fig. 5 Manual Cohesion Test; (a) Pass, (b) Failure

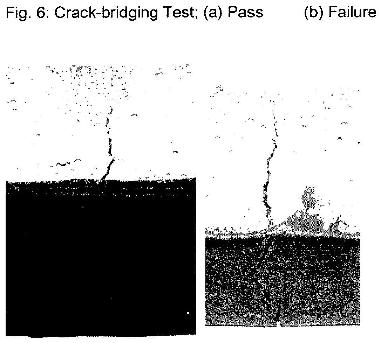

Fig. 6: Crack-bridging Test; (a) Pass, (b) Failure

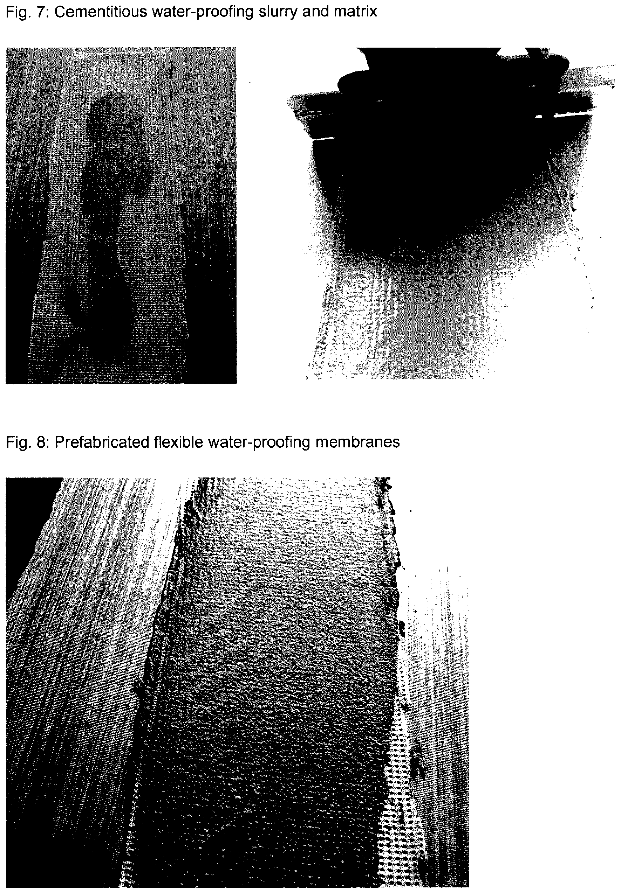

Fig. 7: Cementitious water-proofing slurry and matrix
Fig. 8: Prefabricated flexible water-proofing membranes

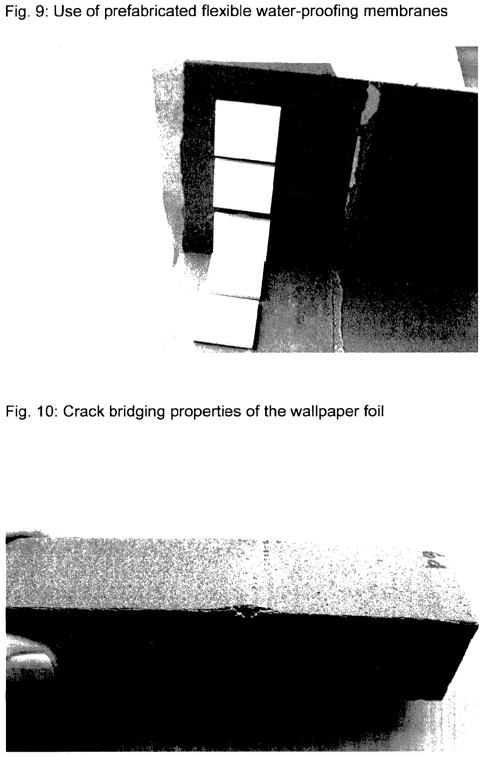

Fig. 9: Use of prefabricated flexible water-proofing membranes
Fig. 10: Crack bridging properties of the wallpaper foil

## Claims

1. A composition for sealing slurries comprising:
(i) 2 - 15 weight % hydraulic binder
(ii) 40 - 77 weight % silica sand
(iii) 15 - 20 weight % polymer
(iv) 5 - 20 weight % limestone powder
(v) 0 - 7 weight % one or more additives
**characterized in that** the hydraulic binder component comprises calcium aluminate cement, calcium sulfoaluminate cement or mixtures thereof and the polymer is selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate, and vinyl versatates, vinyl acetate-acrylic ester copolymer, vinyl acetate-acrylic ester-ethylene copolymer, styrene-butadiene copolymer, styrene-acrylic ester copolymer, and styrene acrylate copolymer, with the acrylic esters in each case being esters with branched or linear alcohols containing from 1 to 10 carbon atoms, preferably the polymer is selected from the group comprising styrene acrylate copolymer, polyvinyl acetate, styrene butadiene copolymer or mixtures thereof in liquid or powder form.

2. A composition as in claim 1, wherein the hydraulic binder component comprises up to 100, 95, 90, 85, 80, 75 or 70 weight % calcium aluminate cement, calcium sulfoaluminate cement or mixtures thereof.

3. A composition as in claim 1 or 2 wherein the hydraulic binder component comprises up to 80, preferably up to 85 weight % calcium sulfoaluminate cement and is free of Portland cement.

4. A composition of any one of the claims 1 - 3 wherein the hydraulic binder component may further contain Portland cement.

5. A composition of claim 4 wherein Portland cement and calcium sulfoaluminate cement are present in a ratio of 0.5 - 0.1.

6. A composition of any of the claims 1 - 5 wherein calcium aluminate cement and calcium sulfoaluminate cement are present in a ratio of 1:5.

7. A composition of any one of the claims 1 - 6, wherein the ratio of polymer to hydraulic binder component is larger than 1.

8. A composition of any one of the claims 1 - 7, further comprising one or more cross-linking components, such as soluble salts of multivalent cations like calcium, aluminium, or zinc.

9. A composition of any one of the claims 1 - 8, further comprising one or more puzzolanic components.

10. A composition of any one of the claims 1 - 9, further comprising an alkaline activator selected from one of calcium hydroxide, sodium hydroxide, ordinary Portland cement or water soluble silicate compounds.

11. A composition of any one of the claims 1 - 10, that is free of anti-caking additives.

12. The use of the compositions of any one of the claims 1-11 in a process or method of making a flexible water-proofing membrane.

13. A flexible water-proofing membrane obtained by a process or method utilizing a composition of any one of the claims 1 - 11.

14. The use of the compositions of any one of the claims 1 - 11 as a flexible coating or waterproofing membrane for concrete or masonry structures.

15. A flexible water-proofing membrane comprising a composition of any one of claims 1-11 and a base matrix or mesh selected from woven, knitted or non-woven natural, polymeric or glass fibers.

## Patentansprüche

1. Zusammensetzung für Dichtschlämme, umfassend:
(i) 2-15 Gew.-% hydraulisches Bindemittel,
(ii) 40-77 Gew.-% Siliciumdioxidsand,
(iii) 15-20 Gew.-% Polymer,
(iv) 5-20 Gew.-% Kalksteinpulver,
(v) 0-7 Gew.-% an einem oder mehreren Zusatzstoffen,
**dadurch gekennzeichnet, dass** die hydraulische Bindemittelkomponente Calciumaluminatzement, Calciumsulfoaluminatzement oder Gemische davon umfasst und das Polymer ausgewählt ist aus der Gruppe bestehend aus Vinylacetatpolymer, Vinylacetat-Ethylen-Copolymer, Vinylacetat-Vinylester-Copolymer und/oder Vinylacetat-Vinylester-Ethylen-Copolymer, wobei die Vinylester-Monomere in jedem Fall ausgewählt sind aus der Gruppe bestehend aus Vinyllaurat, Vinylpivalat und Vinylversataten, Vinylacetat-Acrylester-Copolymer, Vinylacetat-Acrylester-Ethylen-Copolymer, Styrol-Butadien-Copolymer, Styrol-Acrylester-Copolymer und Styrol-Acrylat-Copolymer, wobei die Acrylester in jedem Fall Ester mit verzweigten oder linearen Alkoholen, die von 1 bis 10 Kohlenstoffatome enthalten, sind, wobei das Polymer vorzugsweise ausgewählt ist aus der Gruppe umfassend Styrol-Acrylat-Copolymer, Polyvinylacetat, Styrol-Butadien-Copolymer und Gemische davon in flüssiger oder Pulverform.

2. Zusammensetzung gemäß Anspruch 1, wobei die hydraulische Bindemittelkomponente bis zu 100, 95, 90, 85, 80, 75 oder 70 Gew.-% Calciumaluminatzement, Calciumsulfoaluminatzement oder Gemische davon umfasst.

3. Zusammensetzung gemäß Anspruch 1 oder 2, wobei die hydraulische Bindemittelkomponente bis zu 80, vorzugsweise bis zu 85 Gew.-%, Calciumsulfoaluminatzement umfasst und frei von Portlandzement ist.

4. Zusammensetzung gemäß einem der Ansprüche 1-3, wobei die hydraulische Bindemittelkomponente ferner Portlandzement enthalten kann.

5. Zusammensetzung gemäß Anspruch 4, wobei Portlandzement und Calciumsulfoaluminatzement in einem Verhältnis von 0,5-0,1 vorhanden sind.

6. Zusammensetzung gemäß einem der Ansprüche 1-5, wobei Calciumaluminatzement und Calciumsulfoaluminatzement in einem Verhältnis von 1:5 vorhanden sind.

7. Zusammensetzung gemäß einem der Ansprüche 1-6, wobei das Verhältnis von Polymer zu hydraulischer Bindemittelkomponente größer als 1 ist.

8. Zusammensetzung gemäß einem der Ansprüche 1-7, ferner umfassend eine oder mehrere Vernetzungskomponenten, wie z. B. lösliche Salze von mehrwertigen Kationen, wie z. B. Calcium, Aluminium oder Zink.

9. Zusammensetzung gemäß einem der Ansprüche 1-8, ferner umfassend eine oder mehrere puzzolanische Komponenten.

10. Zusammensetzung gemäß einem der Ansprüche 1-9, ferner umfassend einen alkalischen Aktivator ausgewählt aus einem von Calciumhydroxid, Natriumhydroxid, gewöhnlichem Portlandzement und wasserlöslichen Silicatverbindungen.

11. Zusammensetzung gemäß einem der Ansprüche 1-10, die frei von Rieselhilfsmitteln ist.

12. Verwendung der Zusammensetzungen gemäß einem der Ansprüche 1-11 bei einem Verfahren oder einer Methode zur Herstellung einer flexiblen Dichtungsbahn.

13. Flexible Dichtungsbahn, erhalten durch ein Verfahren oder eine Methode unter Verwendung einer Zusammensetzung gemäß einem der Ansprüche 1-11.

14. Verwendung der Zusammensetzungen gemäß einem der Ansprüche 1-11 als flexible Beschichtung oder Dichtungsbahn für Beton- oder Mauerwerkstrukturen.

15. Flexible Dichtungsbahn, umfassend eine Zusammensetzung gemäß einem der Ansprüche 1-11 und eine Grundmatrix oder ein Gewebe ausgewählt aus gewebten, gestrickten oder nichtgewebten Natur-, Polymer- oder Glasfasern.

## Revendications

1. Composition pour coulis d'étanchéité comprenant :
(i) 2 à 15 % en poids de liant hydraulique
(ii) 40 à 77 % en poids de sable de silice
(iii) 15 à 20 % en poids de polymère
(iv) 5 à 20 % en poids de poudre de pierre calcaire
(v) 0 à 7 % en poids d'un ou plusieurs additifs
**caractérisée en ce que** le composant de type liant hydraulique comprend un ciment d'aluminate de calcium, un ciment de sulfoaluminate de calcium ou des mélanges correspondants et le polymère est choisi dans le groupe constitué par un polymère d'acétate de vinyle, un copolymère d'acétate de vinyle-éthylène, un copolymère d'acétate de vinyle-ester de vinyle et/ou un copolymère d'acétate de vinyle-ester de vinyle-éthylène, les monomères d'ester de vinyle étant en chacun cas choisis dans le groupe constitué par le laurate de vinyle, le pivalate de vinyle, et des versatates de vinyle, un copolymère d'acétate de vinyle-ester acrylique, un copolymère d'acétate de vinyle-ester acrylique-éthylène, un copolymère de styrène-butadiène, un copolymère de styrène-ester acrylique, et un copolymère de styrène-acrylate, les esters acryliques étant en chaque cas des esters avec des alcools ramifiés ou linéaires contenant de 1 10 atomes de carbone, préférablement le polymère étant choisi dans le groupe comprenant un copolymère de styrène-acrylate, un poly(acétate de vinyle), un copolymère de styrène-butadiène et des mélanges correspondants sous forme liquide ou de poudre.

2. Composition selon la revendication 1, le composant de type liant hydraulique comprenant jusqu'à 100, 95, 90, 85, 80, 75 ou 70 % en poids de ciment d'aluminate de calcium, de ciment de sulfoaluminate de calcium ou de mélanges correspondants.

3. Composition selon la revendication 1 ou 2, le composant de type liant hydraulique comprenant jusqu'à 80, préférablement jusqu'à 85 % en poids de ciment de sulfoaluminate de calcium et étant exempt de ciment Portland.

4. Composition selon l'une quelconque des revendications 1 à 3, le composant de type liant hydraulique pouvant en outre contenir un ciment Portland.

5. Composition selon la revendication 4, le ciment Portland et le ciment de sulfoaluminate de calcium étant présents en un rapport de 0,5 à 0,1.

6. Composition selon l'une quelconque des revendications 1 à 5, le ciment d'aluminate de calcium et le ciment de sulfoaluminate calcium étant présents en un rapport de 1 : 5.

7. Composition selon l'une quelconque des revendications 1 à 6, le rapport de polymère au composant de type liant hydraulique étant supérieur à 1.

8. Composition selon l'une quelconque des revendications 1 à 7, comprenant en outre un ou plusieurs composants de réticulation, tels que des sels solubles de cations multivalents comme le calcium, l'aluminium ou le zinc.

9. Composition selon l'une quelconque des revendications 1 à 8, comprenant en outre un ou plusieurs composants pouzzolaniques.

10. Composition selon l'une quelconque des revendications 1 à 9, comprenant en outre un activateur alcalin choisi parmi l'un parmi l'hydroxyde de calcium, l'hydroxyde de sodium, un ciment Portland ordinaire et des composés de type silicate soluble dans l'eau.

11. Composition selon l'une quelconque des revendications 1 à 10, qui est exempte d'additifs antimottants.

12. Utilisation des compositions selon l'une quelconque des revendications 1 à 11 dans un processus ou un procédé de fabrication d'une membrane flexible d'étanchéité à l'eau.

13. Membrane flexible d'étanchéité à l'eau obtenue par un processus ou un procédé utilisant une composition selon l'une quelconque des revendications 1 à 11.

14. Utilisation des compositions selon l'une quelconque des revendications 1 à 11 en tant que revêtement ou membrane d'étanchéité à l'eau, flexible, pour des structures de béton ou de maçonnerie.

15. Membrane flexible d'étanchéité à l'eau comprenant une composition selon l'une quelconque des revendications 1 à 11 et une matrice ou un maillage de base choisi(e) parmi des fibres polymériques ou de verre, tissées, tricotées ou naturelles non-tissées.
